# EUROPÄISCHE PATENTSCHRIFT

(11) **EP 2 827 480 B1**
(45) Veröffentlichungstag und Bekanntmachung des Hinweises auf die Patenterteilung: **04.12.2019**
(21) Anmeldenummer: 14183869.8
(22) Anmeldetag: 14.09.2011
(51) Int. Cl.: H02K 15/14, H02K 5/04, B23P 11/00, B21D 22/00, B21J 13/00, H02K 5/14, H02K 5/15, B21K 25/00

(54) **Verfahren zum Herstellen einer Gehäuseanordnung und Gehäuseanordnung**
Method for producing a housing assembly and housing assembly
Procédé de production d'un ensemble carter et ensemble carter correspondant

(30) Priorität: 20.09.2010 DE 102010041062
(43) Veröffentlichungstag der Anmeldung: 21.01.2015
(62) Teilanmeldung aus: 11757554.8
(73) Patentinhaber: Brose Fahrzeugteile GmbH & Co. Kommanditgesellschaft, Würzburg, 97076 Würzburg (DE)
(72) Erfinder: Dehn, Jochen, 97209 Veitshöchheim (DE); Marko, Tomasovic, 63741 Aschaffenburg (DE); May, Sebastian, 97282 Retzstadt (DE)
(74) Vertreter: Isarpatent

(56) Entgegenhaltungen:
- EP-A2- 0 247 495
- DE-A1- 2 249 684
- DE-A1- 4 412 656
- DE-A1-102007 060 280
- GB-A- 2 194 103
- US-A1- 2002 047 391

## Beschreibung

Die Erfindung betrifft ein Verfahren zum Herstellen einer Gehäuseanordnung und eine Gehäuseanordnung. Offenbart ist außerdem eine Stempelvorrichtung.

Die vorliegende Erfindung sowie die ihr zugrunde liegende Problematik werden nachfolgend in Bezug auf eine Gehäuseanordnung für einen Elektromotor näher erläutert.

Die Druckschrift DE 19 43 053 beschreibt eine Gehäuseanordnung für einen Elektromotor, welche ein Gehäuseteil und ein Verschlussteil aufweist. Das Verschlussteil ist als Lagerschild ausgebildet. Das Verschlussteil ist an dem Gehäuseteil angenietet. Dazu sind an dem Gehäuseteil Nietbolzen ausgebildet. Die Nietbolzen erstrecken sich axial durch entsprechende Löcher in dem Verschlussteil. Die Nietköpfe sind von dem Gehäuseteil aus gesehen hinter dem Verschlussteil ausgebildet, um dadurch einen Formschluss zwischen dem Gehäuseteil und dem Verschlussteil zu schaffen.

Ferner ist der Anmelderin intern ein Verfahren zum Herstellen einer Gehäuseanordnung für einen Elektromotor bekannt. Bei diesem Verfahren wird ein Verschlussteil mit einem Gehäuseteil verstemmt, das heißt es wird eine Presspassung zwischen dem Gehäuseteil und dem Verschlussteil erzeugt.

Bei dem vorstehend beschriebenen, ersten Ansatz zum Herstellen einer Gehäuseanordnung hat es sich als nachteilig herausgestellt, dass das Vorsehen der Nietbolzen mit einem erheblichen Fertigungsaufwand verbunden ist. Bei dem vorstehend beschriebenen zweiten Ansatz hat es sich als nachteilig herausgestellt, dass bei dem Verstemmen hohe Axialkräfte auftreten, welche zu einer Verformung des Gehäuseteils führen. Weiterer Stand der Technik ist GB2194103A und DE102007060280A1.

Aufgabe der vorliegenden Erfindung ist es, die vorstehend beschriebenen Nachteile zu vermeiden.

Diese Aufgabe wird erfindungsgemäß gelöst durch ein Verfahren zum Herstellen einer Gehäuseanordnung für eine elektrische Maschine gemäß Anspruch 1.

Weiterhin wird die Aufgabe erfindungsgemäß gelöst durch eine Gehäuseanordnung für eine elektrische Maschine gemäß Anspruch 8.

Gemäß des erfindungsgemäßen Verfahrens wird eine Öffnung eines Trägerteils auf einen Zapfen an dem Verschlussteil aufgesteckt, wobei der Zapfen zum Hintergreifen des Trägerteils umgeformt wird. Die Umformung des Zapfens erfolgt durch Taumel- oder Radialnieten. Diese Art der Verbindung zwischen dem Trägerteil und dem Verschlussteil weist den Vorteil auf, dass diese einfach herstellbar ist. Außerdem werden keine zusätzlichen Bauteile, wie Schrauben, benötigt. Schrauben sind nachteilig mit einem Loch in dem Verschlussteil verbunden, was wiederum zu Undichtigkeiten gegenüber Fluiden führen kann. Derartige Undichtigkeiten sind aber insbesondere im Bereich der Elektromotoren zu vermeiden.

Gemäße dem erfindungsgemäßen Verfahren ist das Gehäuseteil bevorzugt als Motorgehäusetopf ausgebildet. Das Verschlussteil ist als Lagerschild aus Metall und das Trägerteil als Bürstenträgerteil aus Kunststoff ausgebildet. "Lagerschild" meint ein solches Verschlussteil, welches zur Aufnahme eines Lagers geeignet ist. "Bürstenträgerteil" meint ein solches Trägerteil, welches zum Tragen von Bürsten für einen elektrischen Gleitkontakt zum Kollektor oder zu Schleifringen des rotierenden Teils der elektrischen Masche geeignet ist.

Offenbart ist ausserdem eine Stempelvorrichtung zur Verwendung in dem erfindungsgemäßen Verfahren, mit mehreren Stempeln, welche gleichzeitig jeweils rings um eine Mittelachse einer jeweiligen auszubildenden Delle drehbar, unter einem variierenden Winkel gegen die Mittelachse neigbar und axial in Bezug auf die Mittelachse zustellbar sind, wobei der Kontaktpunkt eines jeweiligen Stempels auf dem Bereich entlang einer Hypozykloide bewegbar ist, um dadurch das Material im Wesentlichen in axialer und tangentialer Richtung in Bezug auf die Mittelachse zu verdrängen, oder mit mehreren Stempeln, welche gleichzeitig jeweils rings um eine Mittelachse einer jeweiligen, auszubildenden Delle drehbar, unter einem konstanten Winkel gegen die Mittelachse neigbar und axial in Bezug auf die Mittelachse zustellbar sind, wobei der Kontaktpunkt eines jeweiligen Stempels auf dem Bereich entlang einer geneigten Spirale bewegbar ist, um dadurch das Material im Wesentlichen in axialer und tangentialer Richtung in Bezug auf die Mittelachse zu verdrängen.

Die zugrunde liegende Idee besteht darin, einen Bereich eines Verschlussteils in Form einer Delle umzuformen, um dadurch eine Verbindung zwischen dem Verschlussteil und einem Gehäuseteil zu schaffen. Es handelt sich demnach um eine lediglich lokale Umformung des Verschlussteils, welche zu einer größeren Ausdehnung des Verschlussteils in der Ebene der Delle führt. Wird aber nun diese Ausdehnung durch das Gehäuseteil beschränkt bzw. unterbunden, kommt es zu einem Kraftschluss zwischen dem Verschlussteil und dem Gehäuseteil. Dieser Kraftschluss wird vorliegend dazu genutzt, das Gehäuseteil mit dem Verschlussteil fest zu verbinden.

Der Vorteil dieses Ansatzes besteht darin, dass keine zusätzlichen Bauteile, wie Schrauben, Nieten oder dergleichen, benötigt werden, um das Verschlussteil mit dem Gehäuseteil zu verbinden. Weiterhin ist der Krafteintrag in das Verschlussteil bzw. das Gehäuseteil aufgrund der lediglich lokalen Umformung des Verschlussteils beispielsweise im Vergleich zu dem bekannten Verstemmen nur gering, so dass eine nachteilige Verformung des Gehäuseteils vermieden werden kann.

Vorteilhafte Ausgestaltungen und Weiterbildungen der vorliegenden Erfindung ergeben sich aus den weiteren Unteransprüchen und aus der Beschreibung in Zusammenschau mit den Figuren der Zeichnung.

Unter einer "Delle" ist vorliegend eine konkave, plastische Verformung in dem Verschlussteil zu verstehen. Bevorzugt weist die Delle in der Draufsicht auf das Verschlussteil eine kreisförmige Außenkontur auf.

Gemäß einer bevorzugten Ausgestaltung des erfindungsgemäßen Verfahrens erfolgt der Schritt des Umformens mittels eines Stempels, welcher rings um eine Mittelachse der auszubildenden Delle gedreht wird und unter einem variierenden Winkel gegen die Mittelachse geneigt ist, wobei der Stempel axial in Bezug auf die Mittelachse zugestellt wird und der Kontaktpunkt des Stempels auf dem Bereich einer Hypozykloide folgt, wodurch das Material im Wesentlichen in axialer und tangentialer Richtung in Bezug auf die Mittelachse fließt. Diese Bewegung des Stempels entspricht der Bewegung, die auch beim Radialnieten zum Einsatz kommt. Dadurch kann die Delle mit einem vergleichsweise geringen Kraftaufwand in dem Verschlussteil geformt werden, so dass eine übermäßige bzw. jegliche Verformung des Gehäuseteils vermieden werden kann.

Gemäß einer weiter bevorzugten Ausgestaltung des erfindungsgemäßen Verfahrens erfolgt der Schritt des Umformens mittels eines Stempels, welcher rings um eine Mittelachse der auszubildenden Delle gedreht wird und unter einem konstanten Winkel gegen die Mittelachse geneigt ist, wobei der Stempel axial in Bezug auf die Mittelachse zugestellt wird und der Kontaktpunkt des Stempels auf dem Bereich einer geneigten Spirale folgt, wodurch das Material im Wesentlichen in axialer und tangentialer Richtung in Bezug auf die Mittelachse fließt. Die Bewegung des Stempels entspricht der Bewegung, wie sie auch beim Taumelnieten zum Einsatz kommt. Auch diese Bewegung des Stempels führt dazu, dass ein vergleichsweise nur geringer Kraftaufwand erforderlich ist, um die Delle in dem Verschlussteil zu formen, wodurch wiederum eine übermäßige Verformung bzw. jegliche Verformung des Gehäuseteils vermieden werden kann.

Gemäß einer weiter bevorzugten Ausgestaltung des erfindungsgemäßen Verfahrens wird der Bereich mittels einer kegelförmigen Fläche des Stempels umgeformt. Die kegelförmige Fläche erleichtert das Formen der Delle.

Gemäß einer weiter bevorzugten Ausgestaltung des erfindungsgemäßen Verfahrens werden mehrere Bereiche des Verschlussteils gleichzeitig jeweils in Form einer Delle umgeformt. Dadurch wird das Verschlussteil gleichmäßig umgeformt, so dass es nicht zu einem Verzug desselben oder einem Verkanten desselben gegenüber dem Gehäuseteil kommt.

Gemäß einer bevorzugten Ausgestaltung des erfindungsgemäßen Verfahrens wird das Verschlussteil vor dem Schritt des Umformens in einen Aufnahmebereich des Gehäuseteils eingelegt und mittels des Schrittes des Umformens mit dem Aufnahmebereich verspannt. Wie bereits erläutert, führt das Formen der Delle in dem Verschlussteil dazu, dass sich dieses in der Ebene der Delle vergrößert. Um diese Vergrößerung für den Kraftschluss zu nutzen, wird das Verschlussteil gemäß der vorliegenden Ausgestaltung in einen Aufnahmebereich des Gehäuseteils eingelegt. Die mit dem Formen der Delle einhergehende Vergrößerung des Verschlussteils führt dann zu einem Verspannen des Verschlussteils mit dem Aufnahmebereich des Gehäuseteils. Das Verspannen ergibt sich daraus, dass das Verschlussteil gegen beispielsweise zwei sich gegenüberliegende Abschnitte des Aufnahmebereichs presst.

Gemäß einer weiter bevorzugten Ausgestaltung des erfindungsgemäßen Verfahrens wird das Verschlussteil mit wenigstens einer Lasche ausgebildet, welche in eine korrespondierende Ausnehmung in dem Gehäuseteil eingreift, wobei die Delle in der Lasche geformt wird. Zunächst einmal sorgt die Lasche für einen Formschluss zwischen dem Verschlussteil und dem Gehäuseteil, beispielsweise in Umfangsrichtung des Gehäuseteils. Weiterhin bedingt der Umstand, dass die Lasche von der Ausnehmung an mehreren Seiten, insbesondere gegenüberliegenden Seiten, begrenzt wird, dass das Formen der Delle in der Lasche zu einem besseren Kraftschluss zwischen der Lasche und der korrespondierenden Ausnehmung führt.

Die vorliegende Erfindung wird nachfolgend anhand der in den Figuren der Zeichnung angegebenen Ausführungsbeispiele näher erläutert. Es zeigen dabei:
- Fig. 1: ausschnittsweise und teilweise schematisch eine Draufsicht auf eine Gehäuseanordnung gemäß einem Ausführungsbeispiel der vorliegenden Erfindung in einem ersten Zustand;
- Fig. 2: die Gehäuseanordnung aus Fig. 1 in einem zweiten Zustand;
- Fig. 3: einen Schnitt A-A aus Fig. 2;
- Fig. 4: eine Stempelvorrichtung gemäß einem Ausführungsbeispiel der vorliegenden Erfindung; und
- Fig. 5: einen Verfahrensablauf gemäß einem Ausführungsbeispiel der vorliegenden Erfindung.

In den Figuren der Zeichnung bezeichnen - sofern nichts Anderes ausgeführt ist - gleiche Bezugszeichen, gleiche Bauteile, Elemente und Merkmale.

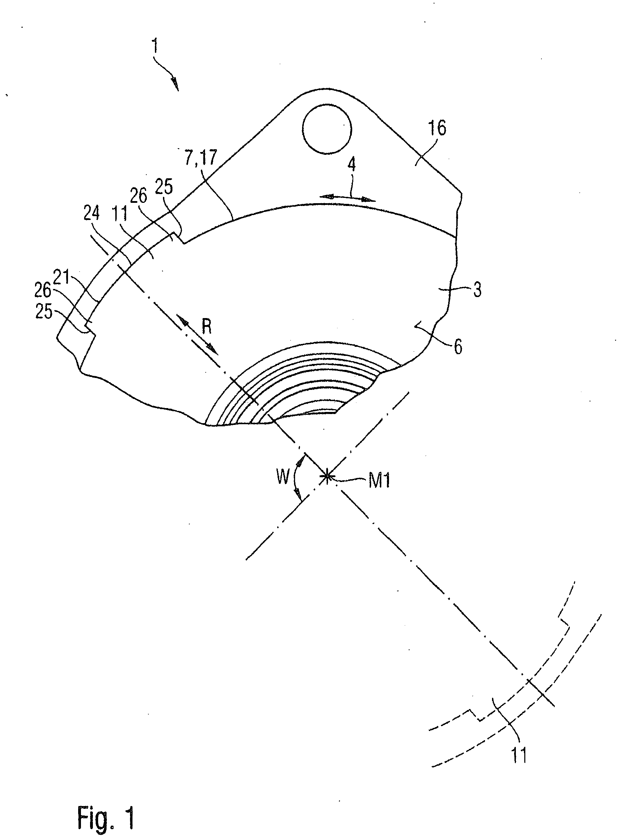

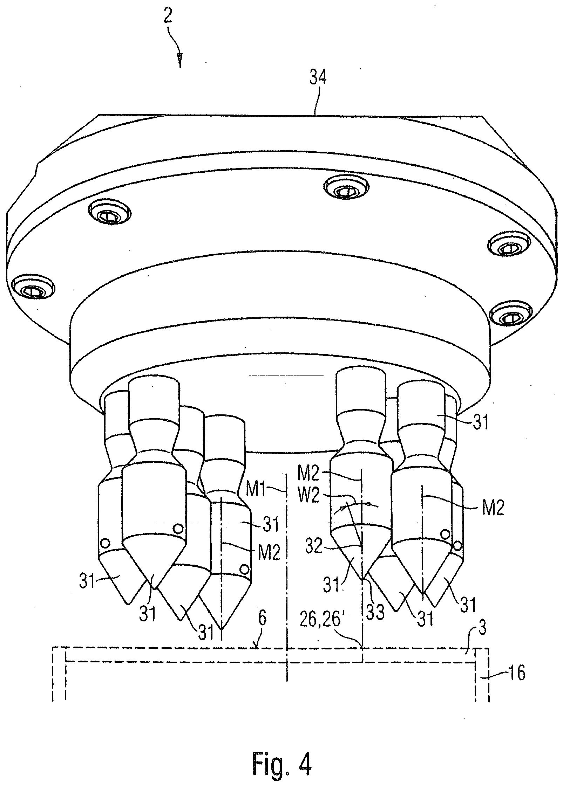

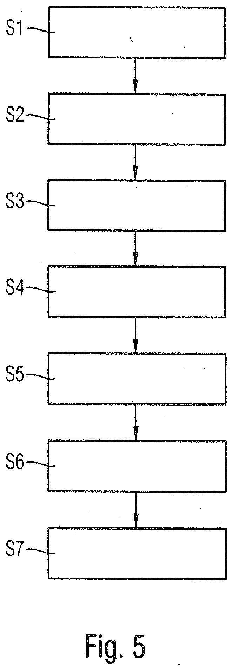

Ausführungsbeispiele einer Gehäuseanordnung 1, siehe Figuren 1-3, eines Verfahrens zum Herstellen derselben, siehe Fig. 5, sowie eine Stempelvorrichtung 2, siehe Fig. 4, zur Verwendung in dem Verfahren werden nachfolgend mit Bezug auf sämtliche Figuren näher erläutert.

### Schritt S1:

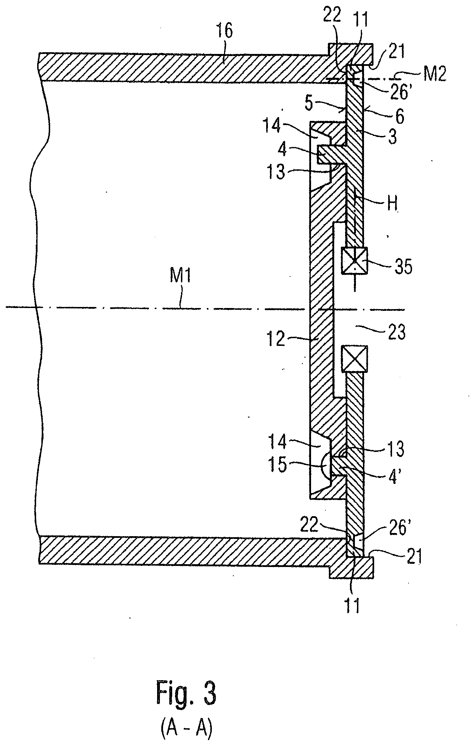

In einem Schritt S1, siehe Fig. 5, wird zunächst ein beispielsweise in etwa ringförmiges Lagerschild 3, siehe Fig. 3, bereitgestellt. Der Lagerschild 3 ist bevorzugt einstückig mit mehreren Zapfen 4 gebildet. Die Zapfen 4 erstrecken sich im Wesentlichen senkrecht zu einer Haupterstreckungsebene H des Lagerschilds 3. Die Zapfen 4 sind auf einer Rückseite 5 des Lagerschilds 3 gebildet.

In Fig. 1 ist die Vorderseite 6 des Lagerschilds 3 zu sehen. Außerdem ist anhand von Fig. 1 zu erkennen, dass an einem äußeren kreisförmigen Umfang 7 des Lagerschilds 3 mehrere Laschen 11 ausgebildet sind. Vorzugsweise sind vier der Laschen 11 entlang des Umfangs 7 des Lagerschilds 3 angeordnet. Diese können beispielsweise jeweils zueinander unter einem Winkel W von 90° zueinander um eine Mittelachse M1 angeordnet sein.

Der Lagerschild 3 ist aus Metall, vorzugsweise Stahl, hergestellt.

### Schritt S2:

In einem Schritt S2 wird ein Bürstenträgerteil 12, siehe Fig. 3, bereitgestellt. Das Bürstenträgerteil 12 weist Durchgangsöffnungen 13 auf. Die Durchgangsöffnungen 13 können im Bereich von Vertiefungen 14 in dem Bürstenträgerteil 12 ausgebildet sein.

Das Bürstenträgerteil 12 ist aus Kunststoff hergestellt.

### Schritt S3:

In einem Schritt S3 wird das Bürstenträgerteil 12 mit seinen Durchgangsöffnungen 13 auf die Zapfen 4 des Lagerschilds 3 aufgeschoben. Hierauf werden die Zapfen 4 mittels Taumel- oder Radialnietens derart umgeformt, dass sich ein Kopf 15 bildet, wie für den Zapfen 4' illustriert, siehe Fig. 3. Der Kopf 15 hintergreift das Bürstenträgerteil 12 und verbindet somit das Bürstenträgerteil 12 fest mit dem Lagerschild 3. Beim Radial- oder Taumelnieten der Zapfen 4 ist der Krafteintrag in das an sich empfindliche (weil aus Kunststoff gefertigt) Bürstenträgerteil 12 nur gering und genau steuerbar.

### Schritt S4:

In einem Schritt S4 wird ein Motorgehäusetopf 16 mit einem vorzugsweise ringförmigen Querschnitt bereitgestellt. Der Motorgehäusetopf 16 ist an seinem inneren Umfang 17, siehe Fig. 1, mit Ausnehmungen 21 gebildet. Die Ausnehmungen 21 sind zur Aufnahme der Laschen 11 geeignet ausgebildet. Weiterhin ist der Motorgehäusetopf 16 mit einer Schulter 22 für eine Anlage der Laschen 11 in axialer Richtung in Bezug auf die Mittelachse M1 gebildet.

Der Motorgehäusetopf 16 ist aus Metall, vorzugsweise aus Stahl gebildet.

### Schritt S5:

In einem Schritt S5 wird die Einheit aus Lagerschild 3 und Bürstenträgerteil 12 in den allgemein mit 23, siehe Figur 3, bezeichneten Aufnahmebereich in dem Motorgehäusetopf 16 eingelegt. Der Aufnahmebereich 23 wird von den Ausnehmungen 21, dem inneren Umfang 17 sowie den Schultern 22 begrenzt.

Beim Einlegen des Lagerschilds 3 in den Motorgehäusetopf 16 gelangen die Laschen 11 des Lagerschilds 3 in Eingriff mit den Ausnehmungen 21. Dieser Eingriff sorgt für einen Formschluss in der Umfangsrichtung U bezogen auf die Mittelachse M1 zwischen dem Lagerschild 3 und dem Motorgehäusetopf 16. In dem in Fig. 1 gezeigten Ausführungsbeispiel weisen die Laschen 11 im Wesentlichen eine Rechtecksform auf, welche von Flächen 24, 25 der Ausnehmung 21 begrenzt werden. Die Flächen 25 liegen sich dabei in der Umfangsrichtung U gegenüber und sorgen für den erwähnten Formschluss in der Umfangsrichtung U. Die Fläche 24 dagegen sorgt für einen Formschluss in der radialen Richtung R in Bezug auf die Mittelachse M1.

### Schritt S6:

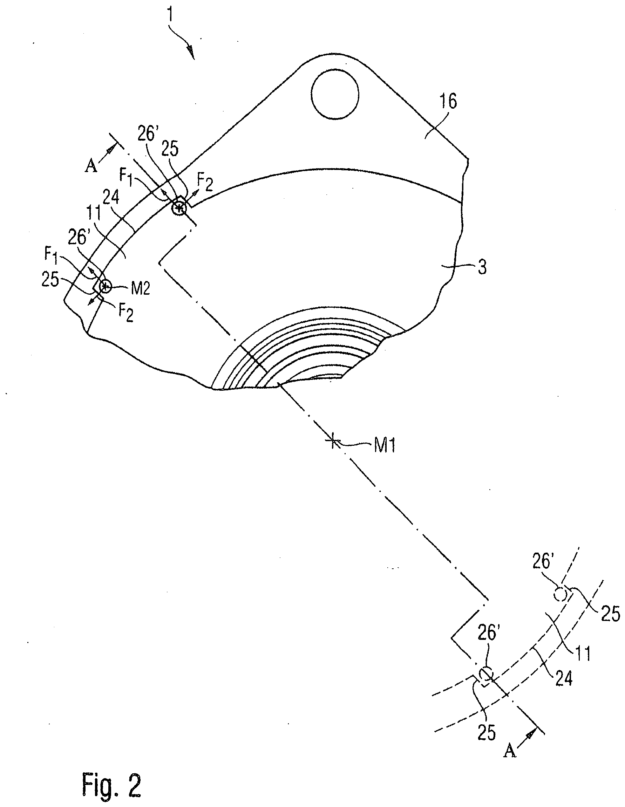

In einem Schritt S6 wird der Lagerschild 3 mit dem Motorgehäuseteil 16 fest verbunden. Dazu werden Bereiche 26, siehe Fig. 1, in Eckbereichen der im Wesentlichen rechtecksförmige Laschen 11 jeweils in Form einer Delle 26', siehe Fig. 2, umgeformt. Dazu wird die Anordnung aus Lagerschild 3 und Motorgehäuse 16 unter der Stempelvorrichtung 2, siehe Fig. 4, angeordnet.

Die Stempelvorrichtung 2 weist acht Stempel 31 auf. Genauso könnten aber auch zwei, drei oder mehr Stempel 31 vorgesehen sein. Die Stempel 31 sind jeweils mit einer kegelförmigen Fläche 32 gebildet. Die kegelförmige Fläche 32 bildet eine Spitze 33 in Richtung des darunter angeordneten Lagerschilds 3 aus. Die acht Stempel 31 sind an einem Halter 34 angebracht, welcher in seinem Inneren eine nicht dargestellte Mechanik zum Bewegen eines jeden Stempels 31 auf die nachfolgend beschriebene Weise aufweist. Diese Bewegung wird nachfolgend anhand lediglich eines Stempels 31 beispielhaft näher erläutert.

Der Stempel 31 wird rings um die Mittelachse M2 einer jeweiligen auszubildenden Delle 26' gedreht. Gleichzeitig wird der Winkel W2, um den der Stempel 31 gegen die Mittelachse M2 geneigt ist, variiert. Weiterhin gleichzeitig wird der Stempel 31 axial, das heißt entlang der Mittelachse M2, in Richtung des Lagerschilds 3 zugestellt. Der Kontaktpunkt des Stempels 31 auf dem Bereichs 26 folgt dabei einer Hypozykloide, wodurch das Material im Wesentlichen in axialer F1, F2 (siehe Fig. 2) und tangentialer Richtung in Bezug auf die Mittelachse M2 fließt.

Jeder der Stempel 31 der Stempelvorrichtung 2 wird auf diese Weise bewegt. Die axiale Zustellung kann durch Bewegen des Halters 34 entlang der Achse M1, also in Richtung des Lagerschilds 3 erfolgen, das heißt insoweit werden die Stempel 31 gemeinsam bewegt.

Die vorstehend beschriebene Bewegung eines Stempels 31 entspricht der beim Radialnieten. Alternativ wäre es auch denkbar, den Winkel W2 konstant zu halten, wobei dann der Punkt des Stempels 31 auf dem Bereich 26 einer abwärts geneigten Spirale folgt. Die somit resultierende Bewegung entspricht der Bewegung beim Taumelnieten.
Die gebildeten Dellen 26' weisen eine im Schnitt, siehe Fig. 3, konvexe und in der Draufsicht, siehe Fig. 2, kreisförmige Gestalt auf.

### Schritt S7:

In einem Schritt S7 wird die hergestellte Gehäuseanordnung 1 weiter ausgerüstet. Dabei kann beispielsweise ein Lager 35, siehe Fig. 3, in den Lagerschild 3 eingebaut werden. Weiterhin kann das Bürstenträgerteil 12 mit nicht dargestellten Bürsten versehen werden. Letztendlich wird somit ein Elektromotor hergestellt.

Der Materialfluss in radialer Richtung, welcher sich aufgrund des vorstehend beschriebenen Taumel- oder Radialumformverfahrens ergibt, ist in Fig. 2 mit zwei Pfeilen F1 und F2 für die Dellen 26' kenntlich gemacht. Der Materialfluss F1, F2 bewirkt, dass sich der Lagerschild 3 in der Haupterstreckungsebene H, in welcher die Dellen 26' liegen, vergrößert. Wie in Fig. 2 zu erkennen, bewirkt der Materialfluss F1 ein Verspannen des Lagerschilds 3 bzw. der sich diagonal gegenüberliegenden Laschen 11 mit den Flächen 24 des Motorgehäusetopfes 16. Ferner führt der Materialfluss F2 zu einem Verspannen einer jeweiligen Lasche 11 zwischen den beiden Flächen 25 des Motorgehäusetopfes 16.

Mittels der Stempelvorrichtung 2 gemäß dem vorliegenden Ausführungsbeispiel können die vier Laschen 11 gleichzeitig jeweils mit zwei Dellen 26' gebildet werden. Dadurch ergibt sich eine gleichmäßige Kraftverteilung beim Schritt des Umformens, wodurch ein Verkippen des Lagerschilds 3 um die Mittelachse M1 vermieden werden kann. Außerdem ist es zeitsparend, die mehreren Dellen 26' gleichzeitig auszubilden.

Obwohl die Erfindung anhand bevorzugter Ausführungsbeispiele beschrieben wurde, ist sie darauf nicht beschränkt, sondern auf vielfältige Weise modifizierbar. Insbesondere sind die für die erfindungsgemäße Gehäuseanordnung beschriebenen Ausgestaltungen und Ausführungsbeispiele entsprechend auf das erfindungsgemäße Verfahren sowie auf die Stempelvorrichtung anwendbar, und umgekehrt. Weiter sei darauf hingewiesen, dass "ein" vorliegend keine Vielzahl ausschließt.

### Bezugszeichenliste

- 1: Gehäuseanordnung
- 2: Stempelvorrichtung
- 3: Lagerschild
- 4: Zapfen
- 4': Zapfen
- 5: Rückseite
- 6: Vorderseite
- 7: Umfang
- 11: Lasche
- 12: Bürstenträgerteil
- 13: Durchgangsöffnung
- 14: Vertiefung
- 15: Kopf
- 16: Motorgehäusetopf
- 17: Umfang
- 21: Ausnehmung
- 22: Schulter
- 23: Aufnahmebereich
- 24: Fläche
- 25: Fläche
- 26: Bereich
- 26': Delle
- 31: Stempel
- 32: kegelförmige Fläche
- 33: Spitze
- 34: Halter
- 35: Lager

- F1: Fließrichtung
- F2: Fließrichtung
- H: Haupterstreckungsebene
- M1: Mittelachse
- M2: Mittelachse
- R: radiale Richtung
- U: Umfangsrichtung
- W1: Winkel
- W2: Winkel

## Patentansprüche

1. Verfahren zum Herstellen einer Gehäuseanordnung (1) für eine elektrische Maschine,
wobei ein Verschlussteil (3), das als Lagerschild (3) ausgebildet und aus Metall hergestellt ist, bereitgestellt wird,
wobei ein Trägerteil (12), das als Bürstenträgerteil (12) ausgebildet und aus Kunststoff hergestellt ist, bereitgestellt wird,
wobei eine Öffnung (13) des Trägerteils (12) auf einen Zapfen (4, 4') an dem Verschlussteil (3) aufgesteckt wird, und
wobei der Zapfen (4, 4') zum Hintergreifen (15) des Trägerteils (12) umgeformt wird,
wobei die Umformung des Zapfens (4, 4') durch Taumelnieten oder durch Radialnieten derart erfolgt, dass sich ein Kopf (15) bildet, der das Trägerteil (12) hintergreift und das Trägerteil (12) fest mit dem Verschlussteil (3) verbindet.

2. Verfahren nach Anspruch 1,
**dadurch gekennzeichnet, dass** die Öffnung (13) des Trägerteils (12) als Durchgangsöffnung im Bereich einer Vertiefung (14) in dem Trägerteil (12) ausgebildet ist.

3. Verfahren nach einem der vorstehenden Ansprüche,
**dadurch gekennzeichnet, dass** ferner ein Gehäuseteil (16) bereitgestellt wird und ein Bereich (26) des Verschlussteils (3) in Form einer Delle (26') umgeformt wird, um dadurch Material des Verschlussteils (3) gegen das Gehäuseteil (16) für einen Kraftschluss zwischen dem Verschlussteil (3) und dem Gehäuseteil (16) zu pressen.

4. Verfahren nach Anspruch 3,
**dadurch gekennzeichnet, dass** das Verschlussteil (3), mit welchem das Trägerteil (12) mittels des Umformens des Zapfens (4, 4') fest verbunden ist, vor dem Schritt des Umformens des Bereichs (26) in einen Aufnahmebereich (23) des Gehäuseteils (16) eingelegt und mittels des Schrittes des Umformens des Bereichs (26) mit dem Aufnahmebereich (23) verspannt wird.

5. Verfahren nach Anspruch 3 oder 4,
**dadurch gekennzeichnet, dass** das Verschlussteil (3) mit wenigstens einer Lasche (11) ausgebildet wird, welche in eine korrespondierende Ausnehmung (21) in dem Gehäuseteil (16) eingreift, wobei die Delle (26') in der Lasche (11) geformt wird.

6. Verfahren nach einem der Ansprüche 3 bis 5,
**dadurch gekennzeichnet, dass** das Gehäuseteil als Motorgehäusetopf (16) ausgebildet ist.

7. Verfahren nach einem der vorstehenden Ansprüche,
**dadurch gekennzeichnet, dass** das Verschlussteil (3) einstückig mit dem Zapfen (4, 4') gebildet ist.

8. Gehäuseanordnung (1) für eine elektrische Maschine,
- mit einem Verschlussteil (3), wobei das Verschlussteil (3) als Lagerschild (3), welcher aus Metall hergestellt ist, ausgebildet ist; und
- mit einem mit dem Verschlussteil (3) fest verbundenen Trägerteil (12), wobei das Trägerteil (12) als Bürstenträgerteil (12), welches aus Kunststoff hergestellt ist, ausgebildet ist;
**dadurch gekennzeichnet, dass** eine Öffnung (13) des Trägerteils (12) auf einen Zapfen (4, 4') an dem Verschlussteil (3) aufgesteckt ist und der Zapfen (4, 4') zum Hintergreifen (15) des Trägerteils (12) umgeformt ist,
wobei der Zapfen (4, 4') durch Taumelnieten oder durch Radialnieten derart umgeformt ist, dass ein Kopf (15) gebildet ist, der das Trägerteil (12) hintergreift und das Trägerteil (12) fest mit dem Verschlussteil (3) verbindet.

9. Gehäuseanordnung nach Anspruch 8,
**dadurch gekennzeichnet, dass** das Verschlussteil (3) einstückig mit dem Zapfen (4, 4') gebildet ist.

10. Gehäuseanordnung nach Anspruch 8 oder 9,
**dadurch gekennzeichnet, dass** die Öffnung (13) des Trägerteils (12) im Bereich einer Vertiefung (14) in dem Trägerteil (12) ausgebildet ist.

## Claims

1. Method for producing a housing arrangement (1) for an electric machine,
wherein a closure part (3) is provided that is embodied as a bearing plate (3) and is produced from metal, wherein a carrier part (12) is provided that is embodied as a brush carrier part (12) and is produced from synthetic material,
wherein an aperture (13) of the carrier part (12) is placed onto a spigot (4, 4') on the closure part (3), and wherein the spigot (4, 4') is shaped so as to engage behind (15) the carrier part (12),
wherein the spigot (4, 4') is shaped by means of orbital rivets or radial rivets in such a manner that a head (15) is formed that engages behind the carrier part (12) and fixedly connects the carrier part (12) to the closure part (3).

2. Method according to Claim 1,
**characterised in that** the aperture (13) of the carrier part (12) is embodied as a throughgoing opening in the region of a depression (14) in the carrier part (12).

3. Method according to any one of the preceding claims,
**characterised in that** moreover a housing part (16) is provided and a region (26) of the closure part (3) is shaped in the form of an indent (26') in order thereby to press material of the closure part (3) against the housing part (16) for a non-positive locking connection between the closure part (3) and the housing part (16).

4. Method according to Claim 3,
**characterised in that** the closure part (3), to which the carrier part (12) is fixedly connected by means of the shape of the spigot (4, 4'), is placed in a receiving region (23) of the housing part (16) prior to the step of shaping the region (26) and said closure part is braced by means of the step of shaping the region (26) to the receiving region (23).

5. Method according to Claim 3 or 4,
**characterised in that** the closure part (3) is embodied having at least one link (11), which engages in a corresponding recess (21) in the housing part (16), wherein the indent (26') is formed in the link (11).

6. Method according to any one of claims 3 to 5,
**characterised in that** the housing part is embodied as a motor housing pot (16).

7. Method according to any one of the preceding claims,
**characterised in that** the closure part (3) is formed as a single part with the spigot (4, 4').

8. Housing arrangement (1) for an electric machine,
- having a closure part (3), wherein the closure part (3) is embodied as a bearing plate (3) that is produced from metal; and
- having a carrier part (12) that is fixedly connected to the closure part (3), wherein the carrier part (12) is embodied as a brush carrier part (12) that is produced from synthetic material;
**characterised in that**
an opening (13) of the carrier part (12) is placed on a spigot (4, 4') on the closure part (3) and the spigot (4, 4') is shaped so as to engage behind (15) the carrier part (12),
wherein the spigot (4, 4') is shaped by means of orbital rivets or by means of radial rivets in such a manner that a head (15) is formed that engages behind the carrier part (12) and fixedly connects the carrier part (12) to the closure part (3).

9. Housing arrangement according to Claim 8, **characterised in that** the closure part (3) is formed as a single part with the spigot (4, 4').

10. Housing arrangement according to Claim 8 or 9, **characterised in that** the opening (13) of the carrier part (12) is embodied in the region of a depression (14) in the carrier part (12).

## Revendications

1. Procédé de fabrication d'un ensemble carter (1) pour une machine électrique,
dans lequel une partie de fermeture (3) qui est réalisée sous la forme d'un flasque (3) et fabriquée en métal est fournie,
dans lequel une partie de support (12) qui est réalisée sous la forme d'une partie de support de balais (12) et fabriquée en matière plastique est fournie,
dans lequel une ouverture (13) de la partie de support (12) est montée sur un tenon (4, 4') de la partie de fermeture (3), et
dans lequel le tenon (4, 4') est déformé pour venir se plaquer derrière (15) la partie de support (12),
dans lequel la déformation du tenon (4, 4') est effectuée par rivetage orbital ou par rivetage radial de telle sorte qu'une tête (15) soit formée, qui vient se plaquer derrière la partie de support (12) et relie solidement la partie de support (12) à la partie de fermeture (3).

2. Procédé selon la revendication 1,
**caractérisé en ce que** l'ouverture (13) de la partie de support (12) est réalisée sous la forme d'une ouverture traversante dans la zone d'un renfoncement (14) dans la partie de support (12).

3. Procédé selon l'une des revendications précédentes,
**caractérisé en ce qu'**une partie de carter (16) est en outre fournie et une zone (26) de la partie de fermeture (3) est déformée sous la forme d'un creux (26') afin de presser ainsi le matériau de la partie de fermeture (3) contre la partie de carter (16) pour une liaison à force entre la partie de fermeture (3) et la partie de carter (16) .

4. Procédé selon la revendication 3,
**caractérisé en ce que** la partie de fermeture (3), à laquelle la partie de support (12) est reliée solidement par la déformation du tenon (4, 4'), est insérée avant l'étape de déformation de la zone (26) dans une zone de réception (23) de la partie de carter (16) et est assemblée par serrage avec la zone de réception (23) au moyen de l'étape de déformation de la zone (26).

5. Procédé selon la revendication 3 ou 4,
**caractérisé en ce que** la partie de fermeture (3) est réalisée avec au moins une patte (11) qui s'engage dans un évidement correspondant (21) dans la partie de carter (16), le creux (26') étant formé dans la patte (11).

6. Procédé selon l'une des revendications 3 à 5,
**caractérisé en ce que** la partie de carter est réalisée sous la forme d'un pot de carter de moteur (16).

7. Procédé selon l'une des revendications précédentes,
**caractérisé en ce que** la partie de fermeture (3) est formée d'une seule pièce avec le tenon (4, 4').

8. Ensemble carter (1) pour une machine électrique,
- comportant une partie de fermeture (3), la partie de fermeture (3) étant réalisée sous la forme d'un flasque (3) qui est fabriqué en métal ; et
- comportant une partie de support (12) reliée solidement à la partie de fermeture (3), la partie de support (12) étant réalisée sous la forme d'une partie de support de balais (12) qui est fabriquée en matière plastique ;
**caractérisé en ce qu'**une ouverture (13) de la partie de support (12) est montée sur un tenon (4, 4') de la partie de fermeture (3) et le tenon (4, 4') est déformé pour venir se plaquer derrière (15) la partie de support (12), le tenon (4, 4') étant déformé par rivetage orbital ou par rivetage radial de telle sorte qu'une tête (15) soit formée, qui vient se plaquer derrière la partie de support (12) et relie solidement la partie de support (12) à la partie de fermeture (3).

9. Ensemble carter selon la revendication 8, **caractérisé en ce que** la partie de fermeture (3) est formée d'une seule pièce avec le tenon (4, 4').

10. Ensemble carter selon la revendication 8 ou 9, **caractérisé en ce que** l'ouverture (13) de la partie de support (12) est réalisée dans la zone d'un renfoncement (14) dans la partie de support (12).
